(19) Europäisches Patentamt
European Patent Office
Office européen des brevets

(11) **EP 3 398 111 B1**

(12) **EUROPEAN PATENT SPECIFICATION**

(45) Date of publication and mention
of the grant of the patent:
**13.12.2023 Bulletin 2023/50**

(21) Application number: **16826746.6**

(22) Date of filing: **28.12.2016**

(51) International Patent Classification (IPC):
*G06V 20/50* (2022.01)  *G06V 20/64* (2022.01)
*G06V 40/10* (2022.01)  *G07C 9/00* (2020.01)
*G06V 20/52* (2022.01)

(52) Cooperative Patent Classification (CPC):
**G06V 20/64; G06V 20/53; G06V 40/10; G07C 9/00**

(86) International application number:
**PCT/EP2016/082737**

(87) International publication number:
**WO 2017/114846 (06.07.2017 Gazette 2017/27)**

(54) **DEPTH SENSING BASED SYSTEM FOR DETECTING, TRACKING, ESTIMATING, AND IDENTIFYING OCCUPANCY IN REAL-TIME**

DEPTH SENSING BASIERTES SYSTEM ZUR ERFASSUNG, TRACKING, GESCHÄTIGUNG UND IDENTIFIZIERUNG DER BESETZUNG IN REAL-TIME

SYSTÈME DE DÉTECTION BASÉ EN PROFONDEUR POUR DÉTECTER, ÉVALUER ET IDENTIFIER L'OCCUPATION EN TEMPS RÉEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2015 US 201562271529 P**

(43) Date of publication of application:
**07.11.2018 Bulletin 2018/45**

(73) Proprietor: **Robert Bosch GmbH**
**70442 Stuttgart (DE)**

(72) Inventors:
• **FRANCIS, Jonathan M.**
**Pittsburgh, Pennsylvania 15206 (US)**
• **MUNIR, Sirajum**
**Pittsburgh, Pennsylvania 15203 (US)**
• **SHELTON, Charles P.**
**Monroeville, Pennsylvania 15146 (US)**

(56) References cited:
**US-A1- 2011 176 000      US-A1- 2013 243 240**
**US-A1- 2014 139 633      US-A1- 2015 049 906**
**US-A1- 2015 294 482**

• **Tim Van Oosterhout: "Head Detection in Stereo Data for People Counting and Segmentation", VISAPP 2011, 5 March 2011 (2011-03-05), pages 1-6, XP055065199, Retrieved from the Internet: URL:http://www.digitallifecentre.nl/jos/in dex.php?option=com_docman&task=doc_view &gi d=70 [retrieved on 2013-06-04]**

**Description**

FIELD

This disclosure relates generally to depth sensors and occupancy estimation and, more particularly, to depth sensing based system for performing at least one of detecting, tracking, estimating, or identifying occupancy in real-time.

BACKGROUND

Unless otherwise indicated herein, the materials described in this section are not prior art to the claims in this application and are not admitted to the prior art by inclusion in this section.

Human presence detection and people counting have been an active area of research. A survey of the state of the art solutions to detect human presence, counting people, tracking individuals, and determining identities.

Occupancy estimation is very useful for a wide range of applications including building energy efficiency, safety, and security. Heating, ventilation, and air conditioning (HVAC) is a major source of energy consumption in the US as approximately 35% energy in the US is used for HVAC in 2006. HVAC systems operate by assuming maximum occupancy in each room, which leads to a significant energy waste, e.g., an HVAC system providing ventilation for 30 people when there are only 10 people in a room. Feeding occupancy count to HVAC systems enables reducing such energy waste as well as enables zone based heating and cooling. When it comes to lighting control, PIR motion sensor based solutions often turn off lights when people are inside but not moving, and keep the lights on for a timeout interval even after everyone leaves from a room and thus waste energy. Estimating number of occupants at real-time enables addressing both issues. In the U.S., almost every building has smoke detectors and fire alarms, but almost none of these buildings has sensors for occupancy estimation. As a result, when there is a fire, it becomes very difficult to determine how many people are trapped in a building. An accurate occupancy estimation solution is very useful for rescue operations. Also, in banks, museums, kindergartens, and high schools, occupancy estimation helps determining whether everyone leaves at the end of the day to improve safety and security. US 2015/0294482 A1 refers to a computer-implemented detection and tracking system and process for detecting and tracking human objects of interests that appear in camera images as well as counting the number of human objects of interest. The image capturing device is a stereo camera, which simulates human binocular vision, wherein a height map is constructed from the pair of stereo images through computations. As human objects of interest are much higher than the ground, local maxima of the height map often represent heads of human objects and object detection is then achieved by locating local maxima in the height map. US 2011/176000 A1, US 2013/243240 A1, US 2014/139633 A1 and the publication from Tim Van Oosterhout: "Head Detection in Stereo Data for People Counting and Segmentation", VISAPP 2011, 5 March 2011 (2011-03-05) relate to systems for detecting people.

Further, several occupancy estimation solutions are available in the market and in the literature that use break-beams sensors, ultrasonic sensors, cameras, and thermal imagers. Break-beams sensor based solutions do not work when multiple people enter or leave through a door simultaneously. Ultrasonic sensor based solutions require significant training and they are not pet friendly. Red Green Blue (RGB) cameras are too privacy invasive to be deployed in many settings, e.g., in office rooms and they don't work in the dark. Low resolution (e.g., an 8x8 pixel Panasonic GridEYE) thermal imagers do not have good enough resolution to detect multiple people entering/exiting simultaneously and high resolution thermal imagers are very expensive, e.g., a 32x32 thermopile array sensor costs over $200 (e.g., Heimann sensor).

What is needed is a reliable and efficient depth sensing system for performing at least one of detecting, tracking, estimating, or identifying occupancy in real-time.

SUMMARY

A summary of certain embodiments disclosed herein is set forth below. The invention is as set out in the independent claim. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

Embodiments of the disclosure related to a depth sensing based system comprises a depth sensor for detecting number of occupants in a site and an occupancy identification module coupled to the depth sensor and is configured to perform at least one of verifying, tracking or identifying number of occupants entering and existing the site, wherein the occupancy identification module is configured to verify the occupant is a human or non-human, track the occupant is either entering or existing the site, and identify at least one of head radius, shoulder size, height, walking speed of the occupant. The depth sensing based system further includes a depth estimation module configured to scan various depth levels of the occupant and extract contours of at least of the head radius, shoulder size, or height of the occupant. The depth estimation module is either coupled to the depth sensor or integrated into the occupancy identification module. At least one of the depth estimation module or the occupancy identification module comprises at least one of greedy bipartite matching algorithm, Naïve Bayes, Multilayer Perceptron, Random Forest, or K*. A communication interface communicatively coupled the system to an external device. The external device may be a personal computer or desktop computer, a laptop, a cellular or smart phone, a tablet, a personal digital assistant (PDA), a wearable device, a gaming console, an audio device, a video device, an entertaining device, a HVAC, a controller, a lighting device, a server, a network, and a system. The depth sensor may be a Time of Flight (TOF) sensor, an optical sensor, an imaging sensor, an acoustic sensor, a motion sensor, a global positioning system sensor, a thermal sensor, or an environmental sensor. In one embodiment, the depth sensor is integrated into an imaging camera.

According to another exemplary embodiment of the disclosure, a depth sensing based system comprises a depth sensor for detecting number of occupants in a site and an occupancy identification module coupled to the depth sensor, the occupancy identification is configured to biometrically track the occupant either entering or existing the site, extract an array of features comprising of at least one of head radius, shoulder size, height, walking speed of the occupant crossing through a threshold, and identify the number of occupants in the site based on the extracted data. The depth sensing based system further comprises a depth estimation module configured to scan various depth levels of the occupant and extract contours of at least of the head radius, shoulder size, or height of the occupant. The depth estimation module is either coupled to the depth sensor or integrated into the occupancy identification module. One of the depth estimation module or the occupancy identification module comprises at least one of greedy bipartite matching algorithm, Naïve Bayes, Multilayer Perceptron, Random Forest, or K*. A communication interface communicatively coupled the depth sensing based system to an external device. The external device is least one of a personal computer or desktop computer, a laptop, a cellular or smart phone, a tablet, a personal digital assistant (PDA), a wearable device, a gaming console, an audio device, a video device, an entertaining device, a HVAC, a controller, a lighting device, a server, a network, or a system.

## BRIEF DESCRIPTION OF THE DRAWINGS

These and other features, aspects, and advantages of this disclosure will become better understood when the following detailed description of certain exemplary embodiments is read with reference to the accompanying drawings in which like characters represent like arts throughout the drawings, wherein:

FIG. 1A illustrates a block diagram of a depth sensing network system 100 according to an exemplary embodiment of the disclosure;
FIG. 1B illustrates a depth sensing system installed above an entryway;
FIG. 1C illustrates a block diagram of the depth sensing system of FIG. 1B;
FIG. 2 is a schematic of a floor of a building divided into a number of rooms;
FIG. 3 is a graph illustrating an occupancy estimation in a time frame;
FIG. 4 illustrates a block diagram of an overview of a Fine Grained Occupancy Estimation module (FORK) in accordance with an exemplary embodiment;
FIG. 5A illustrates the preprocessing step with raw depth data;
FIG. 5B illustrates the preprocessing step after median filtering;
FIG. 5C illustrates the preprocessing step after replacing noise pixels and outliers with the floor depth;
FIG. 6A illustrates multilevel scanning at level 5';
FIG. 6B illustrates multilevel scanning at level 4'6";
FIG. 6C illustrates multilevel scanning at level 4';
FIG. 6D illustrates the determination of the centers and radii of heads after detecting contours;
FIG. 7 illustrates the modeling of a head using a hemi-ellipsoid;
FIGS. 8A, 8B, 8C, and 8D illustrate shoulder detection in a clear environment;
FIGS. 8E, 8F, 8G, and 8H illustrate shoulder detection in a clear environment when a head obstructs a shoulder;
FIGS. 8I, 8J, 8K, and 8L illustrate instances in which a subject is close to a door and a nearby person;
FIG. 9A illustrates a door detection step after preprocessing and median filtering in accordance with an exemplary embodiment;
FIG. 9B illustrates a door detection step after discarding depth data below 1 feet and above 2 feet from the ground in accordance with an exemplary embodiment;
FIG. 9C illustrates a door detection step after Canny edge detection in accordance with an exemplary embodiment;
FIG. 9D illustrates a door detection step after Hough line transformation in accordance with an exemplary embodiment;
FIG. 9E illustrates the final step of door detection in accordance with an exemplary embodiment;
FIG. 10 is a graph illustrating an occupancy estimation performance at different frame rates in accordance with an exemplary embodiment; and
FIG. 11 is a graph illustrating an occupancy identification performance for different number of training samples using various machine learning algorithms including Naïve Bayes, Multilayer Perceptron, Random Forest, and K*.

DETAILED DESCRIPTION

The following description is presented to enable any person skilled in the art to make and use the described embodiments, and is provided in the context of a particular application and its requirements.

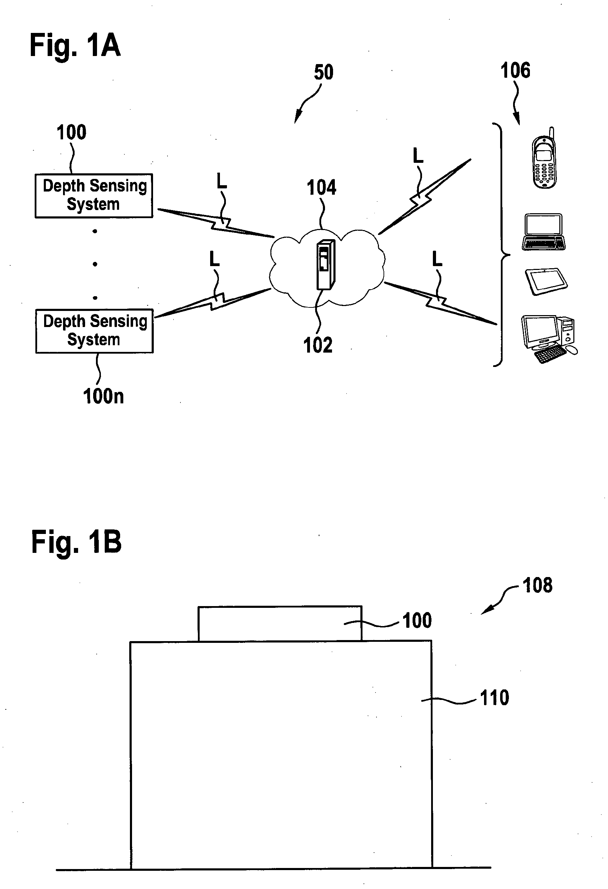

FIG. 1A illustrates a block diagram of a depth sensing network system 100 according to an exemplary embodiment of the disclosure. The network system 100 includes a depth sensing based occupancy tracking and estimation system 100 communicatively coupled to a server 102 via a communication link L over a network 104. The server 102 may be an application server, a certificate server, a mobile information server, an e-commerce server, a FTP server, a directory server, CMS server, a printer server, a management server, a mail server, a public/private access server, a real-time communication server, a database server, a proxy server, a streaming media server, or the like. The network 104 can comprise one or more sub-networks and the server 102 within the network system 100. The network 104 can be for example a local-area network (LAN), a metropolitan area network (MAN), a wide area network (WAN), a primary public network with a private sub-network, a primary private network with a public sub-network, or a primary private network with a private sub-network 104. Still further embodiments include a network 104 that can be any network types such as a point to point network, a broadcast network, a telecommunication network, a data communication network, a computer network, an ATM (Asynchronous Transfer Mode) network, a SONET (Synchronous Optical Network) network, a SDH (Synchronous Digital Hierarchy) network, a wireless network, a wireline network, and the like. Depending on the application, other networks may be used so that data exchanged between the client machine and the server can be transmitted over the network. Network topology of the network 104 can differ within different embodiments which may include a. bus network topology, a star network topology, a ring network topology, a repeater-based network topology, or a tiered-star network topology. Additional embodiments may include a network of mobile telephone networks that use a protocol to communicate among mobile devices, where the protocol can be for example AMPS, TDMA, CDMA, GSM, GPRS, UMTS, LTE or any other protocol able to transmit data among mobile devices. Although only one depth sensing system 100 is provided in a site, more than one depth sensing system 100 may be installed in the same site. If there are more than one site, at least one depth sensing system 100 may be installed in each site. A plurality of depth sensing system 100 may be installed and connected to one or multiple sub-networks, defined as a primary network, located between the depth sensing systems and the server 102. The site may be a room, a place, a space regardless open or closed, any commonplaces, any private access places or locations, and the like. The depth sensing system 100 is configured to detect number of occupants in the site in real-time as described in further detail below.

The communication link L may be wired, wireless, or combination thereof. The network system 50 may be used in commonplace in offices, enterprise-wide computer networks, intranets, internets, public computer networks, or combination thereof. The wireless communication link may include cellular protocol, data packet protocol, radio frequency protocol, satellite band, infrared channel, or any other protocol able to transmit data among client machines. The wired communication link may include any wired line link. At least one machine 106 is communicatively coupled to the depth sensing system 100 via the least one of the network 104 and the server 102. The machine 106 may be a personal computer or desktop computer, a laptop, a cellular or smart phone, a tablet, a personal digital assistant (PDA), a wearable device, a gaming console, an audio device, a video device, an entertainment device such as a television, a vehicle infotainment, or the like. In another embodiment, an external device such as a HVAC, a controller, a lighting device, a controlled device, or a controller may be communicatively coupled to the system.

FIG. 1B illustrates a depth sensing based occupancy tracking and estimation system 100 installed on a site 108. The site 108 includes an entryway 110 and the depth sensing system 100 is mounted above the entryway 100. For simplicity, the door is omitted from the figure. The site may be a room, a place, a space regardless open or closed, any commonplaces, any private access places or locations, and the like. The depth sensing system 100 is communicatively coupled to one or more of the server, network, client machine, and depth sensing system either a wireless or wired communication interface. The depth sensing system 100 is powered by an energy source.

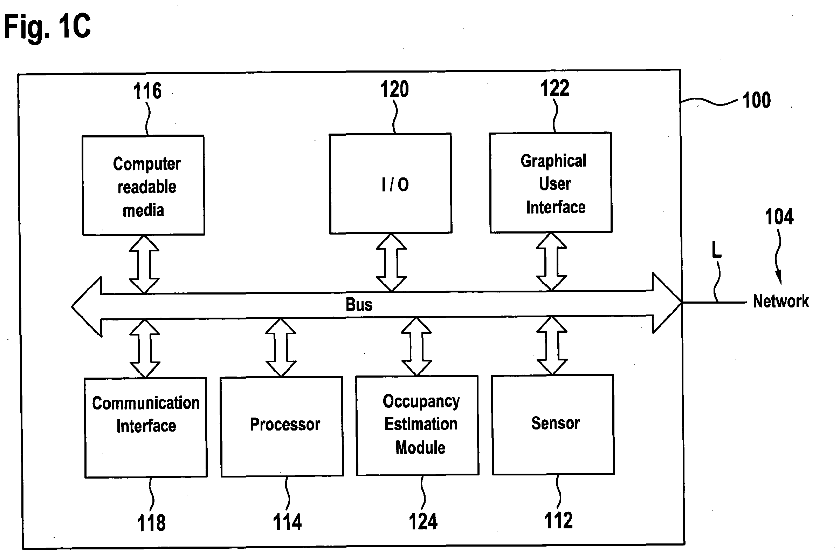

FIG. 1C illustrates a block diagram of the depth sensing based occupancy tracking and estimation system 100 of FIG. 1B. The system 100 includes a sensor 112, a processor 114, a computer readable medium 116, a communication interface 118, an input/output interface 120, and a graphical user interface (GUI) 122. Depending on the application, other computer implemented devices for performing other features not defined herein may be incorporated into the system 100. One or more system buses B coupled to one or more computer implemented devices 112, 114, 116, 118, 120, 122 for facilitating communication between various computer implemented devices 112, 114, 116, 118, 120, 122, one or more output devices, one or more peripheral interfaces, and one or more communication devices. The system buses 220 may be any types of bus structures including a memory or a memory controller, a peripheral bus, a local bus, and any type of bus architectures. The sensor 112 is a depth sensor, sometime referred as a Time of Flight (TOF) sensor is configured to detect number of occupants in real-time in the site. Although one sensor 102 is illustrated, more than one depth sensor may be disposed within the system 100. Other types of sensor such as optical sensors, imaging sensors, acoustic sensors, motion sensors, global positioning system sensors, thermal sensors, environmental sensors, and so forth may be coupled to the depth sensor and mounted within the system 100. In some embodiments, other non-depth sensor as a separate device may be electrically coupled to the system 100. The processor 114 may be a general or special purpose microprocessor operating under control of computer executable instructions, such as program modules, being executed by a client machine 106. Program modules generally include routines, programs, objects, components, data structure and the like that perform particular tasks or implement particular abstract types. The processor 114 may be a microprocessor (μP), a microcontroller (μC), a digital signal processor (DSP), or any combination thereof. The processor 114 may include one or more levels of caching, such as a level cache memory, one or more processor cores, and registers. The example processor cores 114 may (each) include an arithmetic logic unit (ALU), a floating point unit (FPU), a digital signal processing core (DSP Core), or any combination thereof. In one embodiment, some or all of the sub-processors may be implemented as computer software tangibly stored in a memory to perform their respective functions when executed. In alternate embodiment, some or all of the sub-processors may be implemented in an ASIC. As illustrated, the processor 114 is a low power microprocessor configured to process depth data.

The computer readable media 116 may be partitioned or otherwise mapped to reflect the boundaries of the various subcomponents. The computer readable media 116 typically includes both volatile and non-volatile media, removable and non-removable media. For example, the computer readable media 116 includes computer storage media and communication media. Computer storage media includes both volatile and nonvolatile, removable and non-removable media implemented in any method or technology, CD-ROM, DVD, optical disk storage, magnetic cassettes, magnetic tape, magnetic disk storage or other magnetic storage device, or any other medium which can be used to store the desired information and which can accessed by a client machine. For example, computer storage media can include a combination of random access memory (RAM), read only memory (ROM) such as BIOS. Communication media typically includes computer readable instructions, data structures, program modules, or other data in a modulated data signal such a carrier wave or other transport mechanism and include any information delivery media. Communication media may also include wired media such as a wired network or direct-wired communication, and wireless media such as acoustic, RF, infrared (IR) and other wireless media. Communications of the any of the above should also be included with the scope of computer readable media.

The input/output subsystem 120 includes various end user interfaces such as a display, a keyboard, joystick, a mouse, a trackball, a touch pad, a touch screen or tablet input, a foot control, a servo control, a game pad input, an infrared or laser pointer, a camera-based gestured input, and the like capable of controlling different aspects of the machine operation. For example, user can input information by typing, touching a screen, saying a sentence, recording a video, or other similar inputs. The communication interface 118 allows software and data to be transferred between the computer system and other external electronic devices in the form of signals which may be, for example, electronic, electromagnetic, optical, or other signals capable of being received by the communication interface 118. The communication interface 118 may be for example a modem, a network interface, a communication port, a PCM-CIA slot and card, or the like.

An occupancy estimation module 124 is incorporated in the system 100. The module 124 may be communicatively coupled to one or more computer implemented devices 112, 114, 116, 118, 120, 122, in some embodiments. In another embodiment, the module 124 may be embedded into the processor 114 and is configured to detect number of occupants in the site in real-time as described in further detail below.

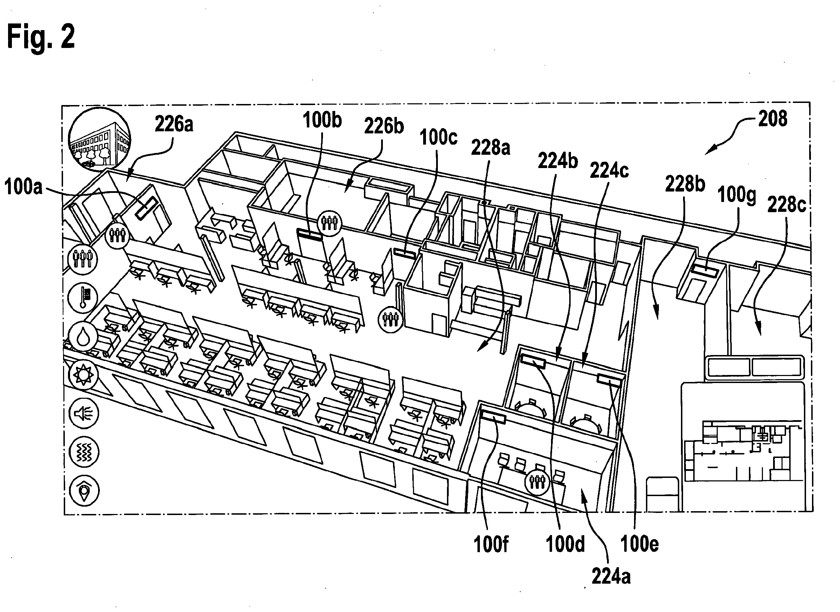

FIG. 2 illustrates a layout example of a particular floor of a building 200 that will be used throughout this description to aid in describing the depth sensing based occupancy tracking and estimation system 100. The floor is divided into various conferences 224a-224c, offices 226a, 226b, and main hall offices 228a-228c. In some embodiments, the floor may further include other rooms such as kitchen, laboratory, general mailroom, and any types of site. Within each room 224a-224c, 226a-226b, 228a-228c, depth sensing systems 100a-100g are installed to detect number of occupants in each room in real-time. As illustrated, the depth sensing systems 100a-100g are installed above the entryway of the rooms 224a-224c, 226a-226b, 228a-228c. The depth sensing systems 100a-100g communicatively coupled to one or more networks and servers are either powered by the same energy source or powered separately. In some rooms that are not labeled in the figures, optional depth sensing system may be installed to detect number of occupants in that rooms.

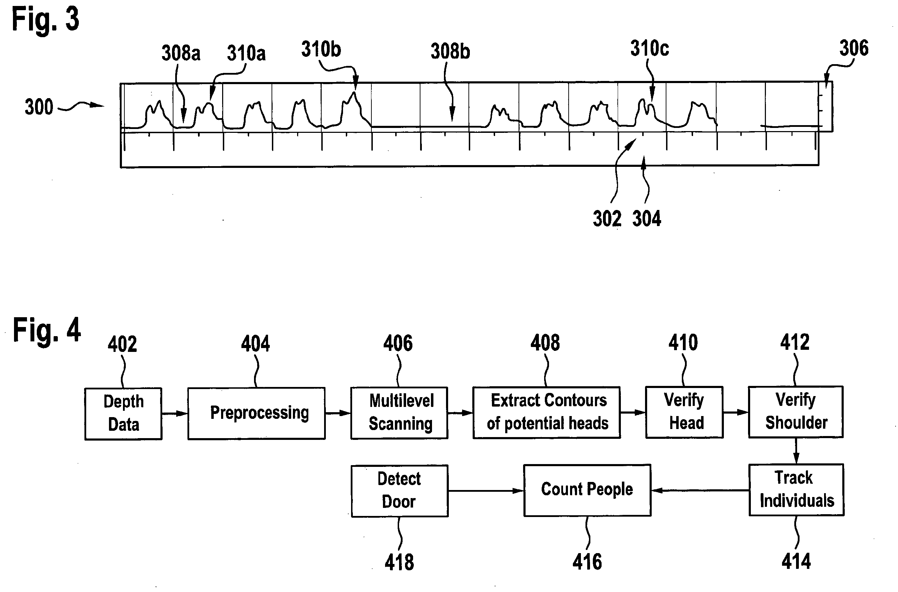

FIG. 3 illustrates a chart of an occupancy pattern 300 taken over a time frame, i.e. two weeks for a particular deployment. X axis represents the date and time of occupancy change 304. Y-axis represents the corresponding occupancy count at that date and time 306. For example, it shows that on Sept 25th 1:00 PM, there were 44 people in this particular room 310b.

FIG. 4 illustrates a high level block diagram of an occupancy estimation module where depth data inputs are received for processing. A depth sensor 112 of the depth sensing based occupancy tracking and estimation system 100 located above the entryway detects at least one object upon either entry into a particular room or exit the particular room.

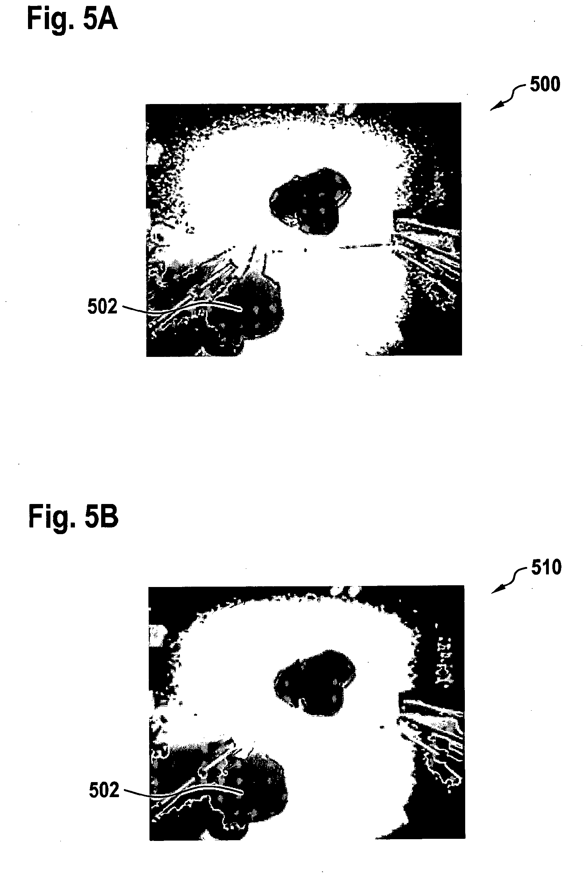

The detected depth data is then displayed for preprocessing to remove noise embedded in the depth data. At least a depth image 500, as illustrated in FIG. 5A, is displayed either on a client device 106 or on a display of the depth sensing system 100 at low frame rate. In one example, the depth image 500 has a 512x424 resolution produced at 30FPS. Other types of resolution, depending on the application, may be displayed. The generated depth data stream in the image may be very noisy. Each pixel of a depth frame or depth image provides a distance from the depth sensing system 100 to the nearest objects in millimeter. However, in the presence of a noise, the corresponding pixel has a value of 0.

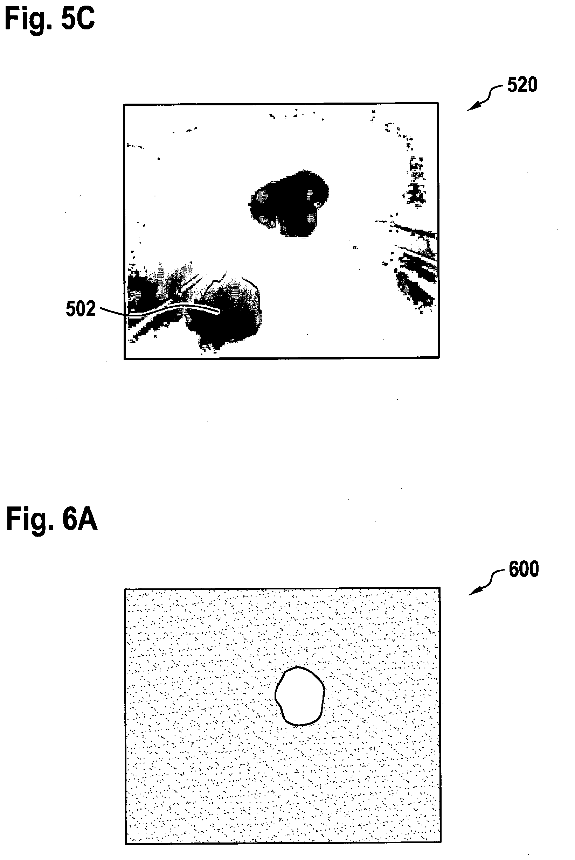

Darkest pixels as depicted in the image 500 of FIG. 5A are noises. A portion of a head of a person 502 is noisy. To smooth the depth image, a preprocessing such as a median filtering with a 5x5 window is performed at step 404 of FIG. 4, if the depth data is noisy. If the depth data is not noisy, median filtering is not performed. After the median filtering, a preprocessed image 510 is illustrated in FIG. 5B. Then we reset noise pixels and outliers (depth too high) to floor depth, of which an image 520 is shown in FIG. 5C. The floor depth is computed by computing a histogram of the depth values of a frame, where the bin with the maximum number of depth data points is considered the floor. In some embodiment, the floor depth may be computed before applying the median filtering and all noise pixels are ignored while building the histogram.

After step 404, a multilevel scanning at step 406 is performed, where the system 100 scans a few potential depth levels to detect humans. For each level, the system extract contours of potential heads at level 408 and ignore the depth data below that level. Using the contours, the depth estimation module detects minimum enclosing circles of the contours, which provides approximate centers and radii of the heads. For each identified circles, the module uses the 3D depth data to verify whether it is an individual, i.e. a human or non-human. The step 408 continues to verify the presence of a head and a shoulder. For verifying head and shoulder in steps 410, 412, an orientation invariant 3D human model is used by leveraging anthropometric properties of human heads and shoulders as these are the most prominent body parts seen from the ceiling. The orientation invariant 3D human model may be either integrated into the depth estimation module or integrated into the system 100 as a separate computer implement device. Thereafter, the system 100 tracks individuals to determine whether they are going inside or outside through the nearby door to count people in steps 414 and 416. The system 100 determines the location of the door in step 418 and then tracks individuals in step 414 to determine whether they are entering or leaving a particular room for estimating number of occupants in that room.

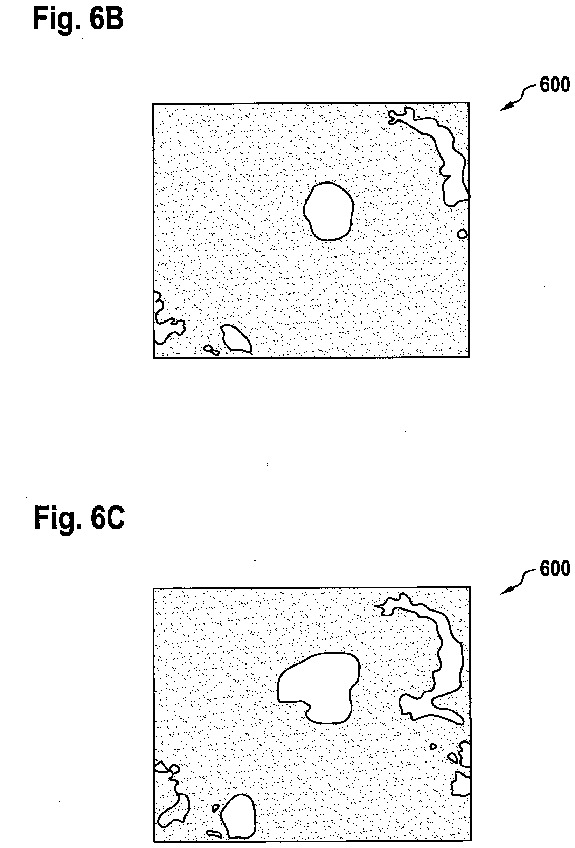

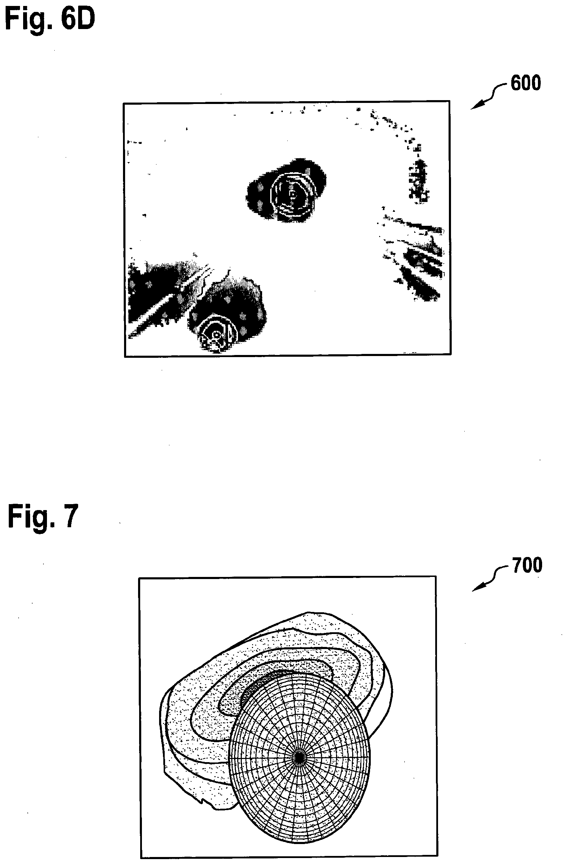

FIGs. 6A-6D illustrate images 600 taken by the depth sensing system 100 during a multilevel scanning process. Centers and radii of minimum enclosing circles of all the potential heads at different height levels are determined.

Typically, average height of an adult male is about 5'7" to 5'11" and a female is about 5'2" to 5'7". The system estimates the floor depth, scans depth data for example 6' to 2' at every 6 inches interval from the floor. When the system scans depth data a height level, all the depth data below that level is discarded. FIGs. 6A-6C show the depth data after scanning at levels 5', 4'6", and 4', respectively. As an example, when the system scans at 6', if Person A and Person B have heights 6'6" and 6' 1" respectively, only top 6" and 1" of their heads are displayed, respectively. The system further detects all the contours at that depth level. For each contour, the system finds the minimum enclosing circle using an iterative algorithm, which gives us the center and radius of a head. Some circles with radius smaller than a threshold to be a head are discarded. For example, Person B may be discarded at 6' level scanning, but is detected at level 5'6" scanning. For each detected center and radius, the system verifies whether it is a person by verifying the presence of a head using head verification as defined in Equation 1 and a shoulder using shoulder verification described further below. Note that a person can be detected at different levels. The scanning process begins by scanning at a point from the top and when the system verifies a person at a higher depth level, all the nearby centers at lower levels are then discarded.

Although the scanning process needs to be rendered at different levels, scanning at all the levels can be performed in parallel using different threads. Also, in order to speed up, the system may not scan at the levels that include insufficient depth data compared to the background. The system determines an approximate background by building a histogram of depth data points at different scanning levels for example 6 inches of bin size. Each time the system updates the histogram by assuming that the minimum number of depth data points seen so far at a level is from the background, which reasonably captures the wall, door, tables etc. in the environment.

FIG. 7 illustrates a head modeling image 700 according to a described embodiment of the disclosure. Given a center (cx, cy) and a radius (r) of a head, the system verifies if there is a human head at this position. A human head is modeled using a hemi-ellipsoid, which is orientation invariant.

A top half of the ellipsoid, defined as a hemi-ellipsoid is depicted in FIG. 7. An ellipsoid in Cartesian coordinates is represented by equation (1), where a, b, and c are the lengths of the semi axes and (cx, cy, cz) is the center of the ellipsoid.

$$\frac{(x - c_x)^2}{a^2} + \frac{(y - c_y)^2}{b^2} + \frac{(z - c_z)^2}{c^2} = 1 \quad \text{[Equation 1]}$$

If a = b = c, the ellipsoid becomes a sphere. Since two different units in the axes are need, a = b = r (in pixel co-ordinate) is set, and c = 0.5∗ D (in depth co-ordinate) is set, where D is the depth of a human head. Based on the average length of a human head, D = 220 mm is set. cx = cx, cy = cy, and cz = T + 0.5∗ D is set, where T is smallest distance between the depth sensing system 100 and the head (computed from the depth data within the contour). We iterate over the x, y values of the detected contours and use equation (1) to compute a z value for each (x,y) and compare it with the corresponding z value in the depth frame. If the average difference is less than a threshold *Thead,* a head detected is reported. *Thead* is set to 40 for by evaluating on many objects including kids, people wearing turbans and regular caps, women with pony tails, and movement of empty chairs, boxes and table lamps.

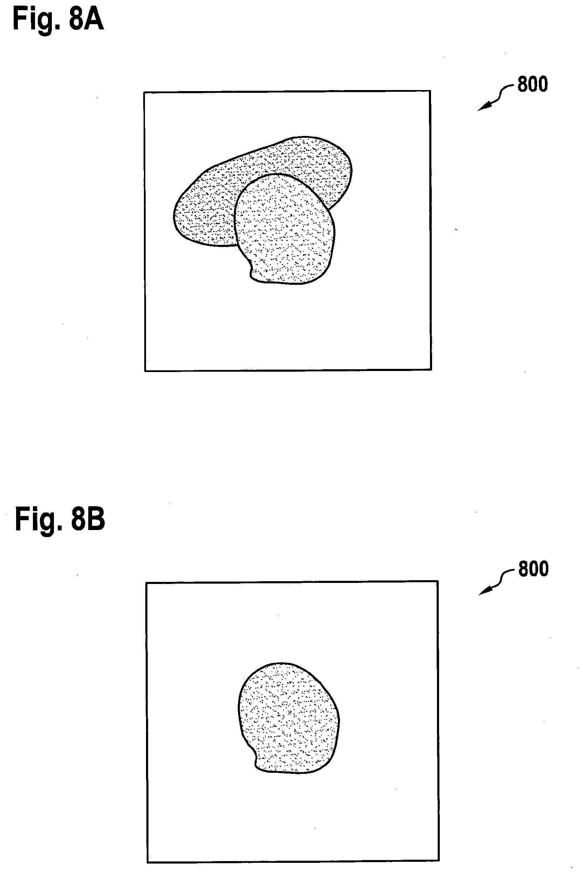

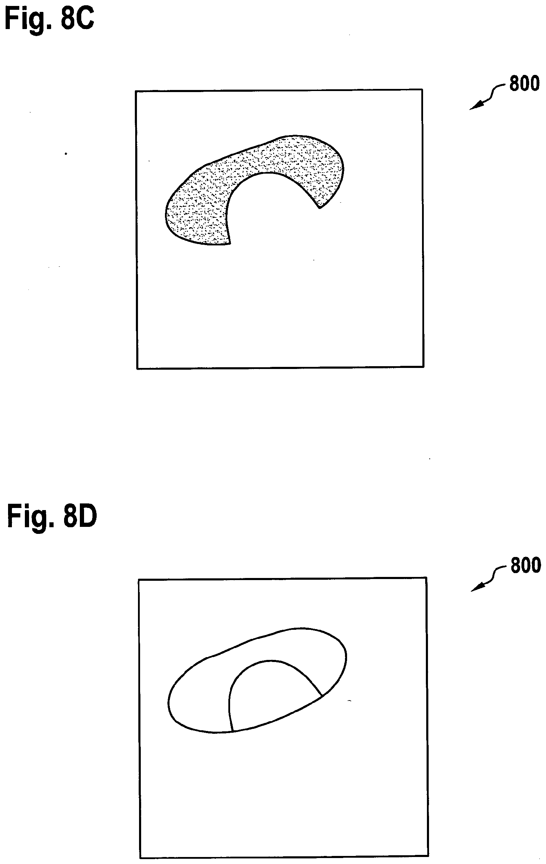

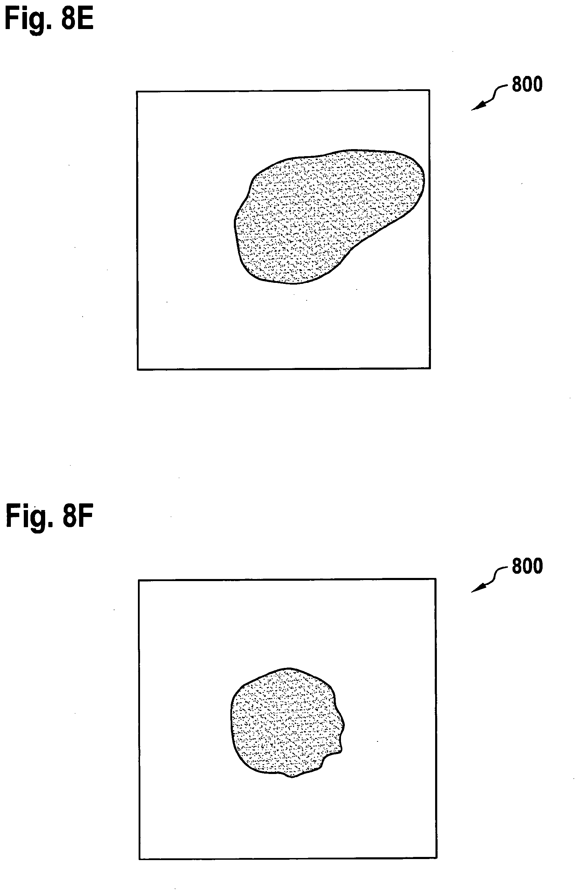

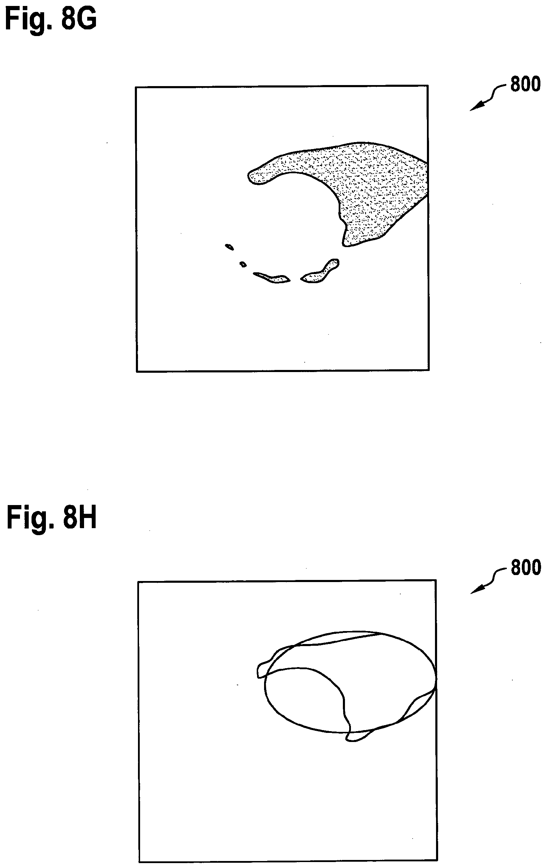

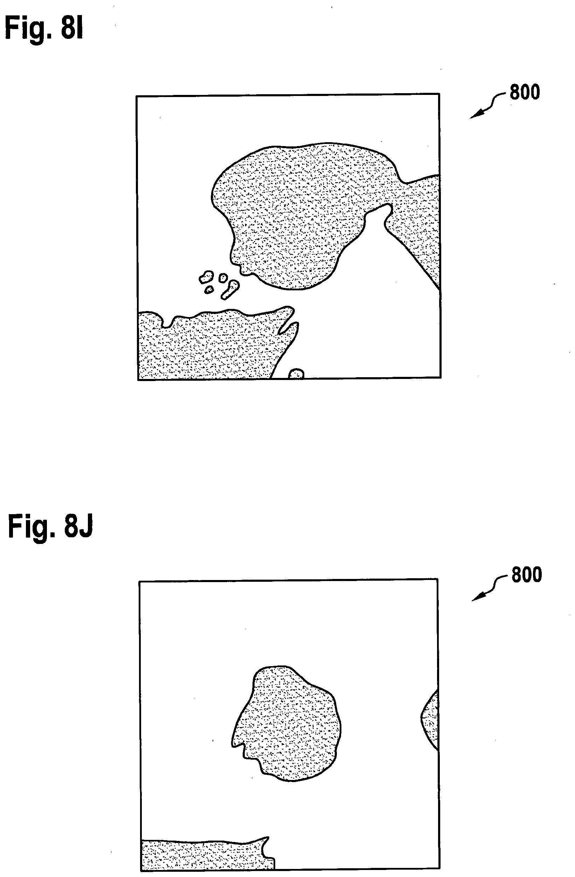

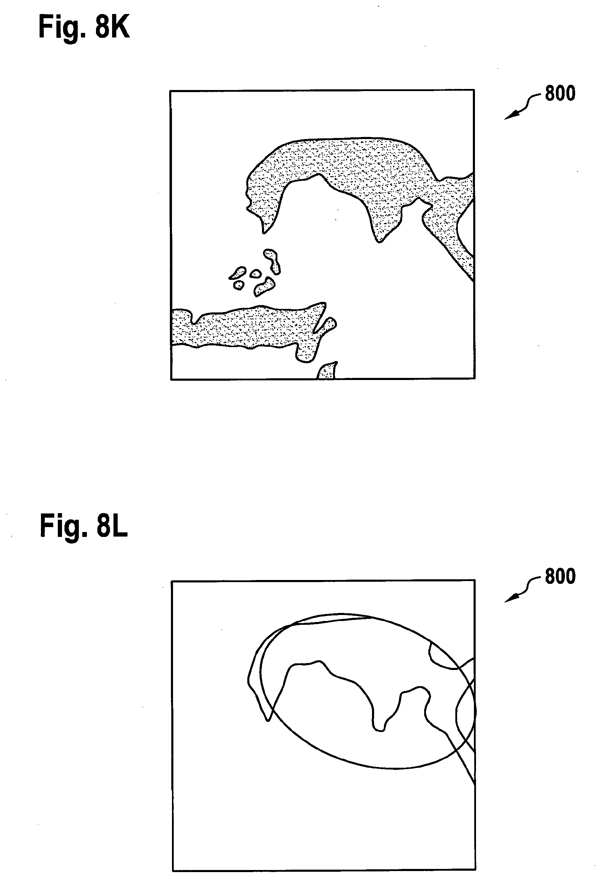

FIGs. 8A-8L illustrates various images 800 where shoulder is detected. Given a center (cx, cy) and a radius (r) of a head 804 to verify if there is a human shoulder 802 close to this position. In order to verify a shoulder, a region of interest (ROI) surrounding the head and the shoulder is considered. The end to end distance between two shoulders of a person is around three times of his head diameter and hence we choose a slightly bigger square ROI around the head. FIG. 8A shows one such ROI. The system extracts the head from it by discarding all the depth data higher than T + D, as shown in FIG. 8B. The system subtracts information in FIG. 8B from FIG. 8A to obtain the shoulder depth data as illustrated in FIG. 8C. All the depth data higher than T + D + S is set to zero values, where S is the depth of the shoulder. S is set to 250 mm, as ~10 inch depth is reasonable enough to capture a shoulder. The system determines whether the depth data obtained from previous step conforms to a shoulder. In one embodiment, the system detects contours and measures a goodness of fit to an ellipse. In another embodiment, the system computes a histogram of depth data and check if there is at least bin that has enough depth data points to represent a shoulder. Using the shoulder verification thus avoids any spherical objects, e.g., balls, balloons, spherical lamps, or the like. In some embodiments, the head verification may be used for counting people,. Shoulder size computation, in another embodiment, may be used for identifying and tracking occupants.

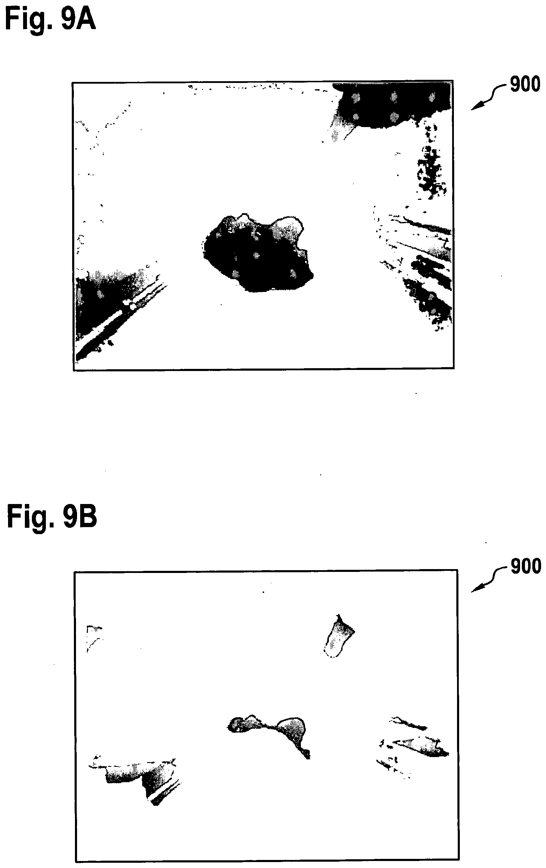

FIGs. 9A-9E illustrate various images 900 where a door 910 is detected. The system 100 is installed above the entryway as shown in FIG. 1B where the X axis of the depth sensor is mounted in parallel to the door. The system automatically determines the door location by analyzing the depth data by leveraging this mounting strategy.

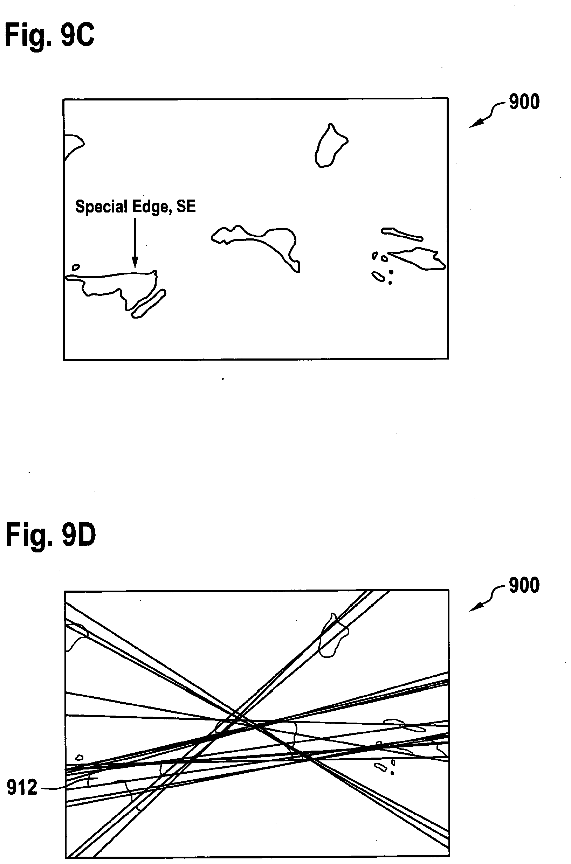

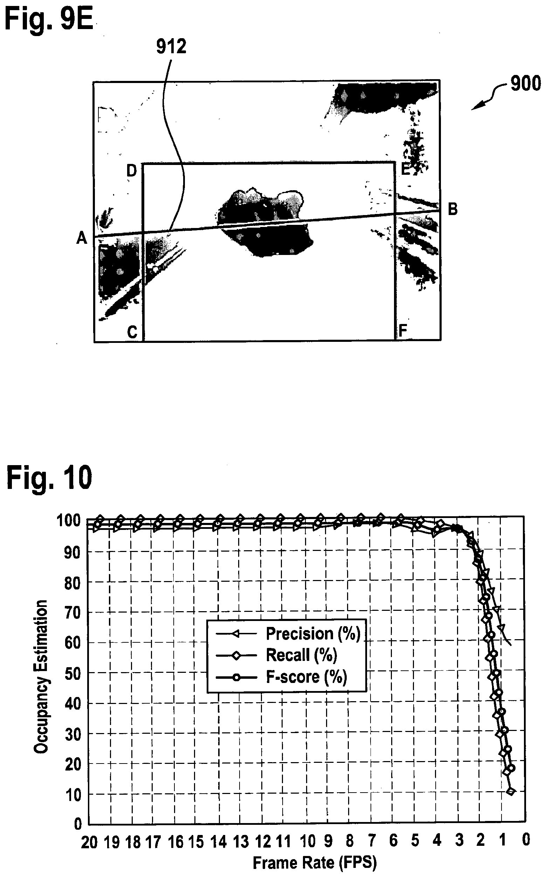

To detect the door location, the system 100 starts with the preprocessed image and median filtering is performed with kernel size 5 as illustrated in FIG 9A. Next, the depth data that are very close to the ground (within 1 foot, for example) and 2 feet above it, for example are discarded by replacing these depth data with the maximum floor depth as illustrated in FIG 9B. This process is useful by getting an edge near the floor (Special Edge or SE) as illustrated in FIG 9C that is leveraged in the subsequent steps. People, one person 906 is illustrated, is included in the setting to demonstrate the ability to deal with such cases. The system continues to detect Canny edges to increase contrast and reduce further noise as illustrated in FIG 9C. Hough line transformation on the Canny edges is performed to detect straight lines as depicted in FIG 9D. From the candidate Hough lines, the system 100 chooses the line having the highest accumulator vote that is most parallel to the X axis of the depth frame. In FIG. 9D, a line 912 having the highest accumulator vote and parallel to the X axis of the depth frame is shown. Now referring to FIG. 9E, line AB is shown and is similar to the line 912 illustrated in FIG. 9D. Line AB represents the location of the door. If someone walks from the left/right side and enter into the room without crossing AB may not be detected by the system. One or more lines such as lines CD, DE, and EF may be added/drawn as illustrated in FIG 9E, defines as a frame. The system sets line AB to be the middle line of the frame CDEF. If the door is too wide, the system can still be able to detect line AB since the line AB formed within the frame CDEF.. A train module either coupled to or integrated into the sytem can update the door locations, if needed. Such configuration improves the accuracy of occupancy estimation, especially at low frame rates.

In some embodiments, a depth sensing network system 100 may perform basic tracking to determine whether people went inside or outside through a door to count them accurately. In another embodiment, a depth sensing network system 100 may perform biometric tracking to identify and track individuals. For example, the depth sensing network system may perform basic tracking by tracking the object entering or existing a room using a lightweight greedy bipartite matching algorithm that leveraging the position, height, and head radius of people. The lightweight greedy bipartite matching algorithm is integrated into either the system 100 or the train module coupled to the system 100.

Assume that the system detects N and M people in the previous frame and in the current frame, respectively. For each paired people (i,j), where i E {1,2,3,...,N} and j $\in$ { 1,2,3,...,M}, the system normalizes the distance between head centers, the difference of head radii, and the difference of heights of them. Then the system computes a weighted distance by using these three distances. The height of a person varies up to 40 millimeters is observed when the person walks from one side to the other. Hence, 0.5 weight to height difference is set. A weight of 1 to the distance between head centers is set and a similar weight is set for the difference of head radii. If the head center distance is too high for a person to be moved between two consecutive frames, the distance is set to infinity. Then the system sorts the distances in ascending order, pairs, marks the paired ones, and avoids the paired ones in the subsequent pairing. If someone j $\in$ {1,2,3,...,M} is not paired, the system adds the person in the current frame. However, if someone i $\in$ {1,2,3,...,N} is not paired, the system does not immediately discard the person. Because, it is possible that someone in a frame may be missed and may be detected in the next frame. For the missing person, the system predicts the person's current position based on the person's average walking speed and direction, and updates location of the center of the person's head accordingly. To do so, every time a person is paired, the system updates average walking speed and direction of the person.

The system deals with a low frame rate condition, where someone can move a considerable distance between consecutive frames. It may affect negatively in tracking when someone (P1) leaves through a door and someone else (P2) enters from the other side of the door at the next frame. It may look like P1 has moved towards his opposite direction and may increase/decrease the occupancy count erroneously. As the head of P1 is missing at the current frame, the greedy bipartite matching tries to match earlier frame's P1 with current frame's P2. To avoid it, the walking direction is considered and if a matching requires a reversal of direction, the system checks if there is a presence of a depth shadow of P1 in the current and previous frames at his respective predicted positions. By depth shadow, it is meant that a head is missing, but a partial body contour is seen near to that location. If a depth shadow is present, the system assumes that P1 is/was there while P2 enters and does not allow the matching.

As described earlier the depth sensing network system 100 may perform biometric tracking to identify and track individuals. For example, every time when someone enters/exits, the depth sensing network system 100 extracts 38 simple features regarding height, head radius, shoulder size, going in/coming out, and walking speed of the subject. Although 38 simple features are disclosed, more or less than 38 simple features may be extracted, depending on the application. In one example, the system extracts 12 features regarding height including the minimum, maximum, average, and exact height from the depth data when a person is crossing a threshold, such as the frame CDEF and line AB during the entrance/exit event. Similar features are extracted regarding the head radius and shoulder size. A train module coupled to or integrated into the system and includes at least one of several machine learning algorithms is configured to identify individuals. The machine learning algorithms include at least one of Naïve Bayes, Multilayer Perceptron, Random Forest, or K*. In some embodiments, the machine learning algorithms may be run either in the cloud (network 104). In another embodiment, the machine learning algorithms may be run in an occupancy estimation module an occupant identification module other than the train module. The occupancy estimation module, the occupant identification module, or the like may be either integrated into the system 100 or communicatively coupled to the system 100. The following section shows an example of how its performance varies for different amount of training data.

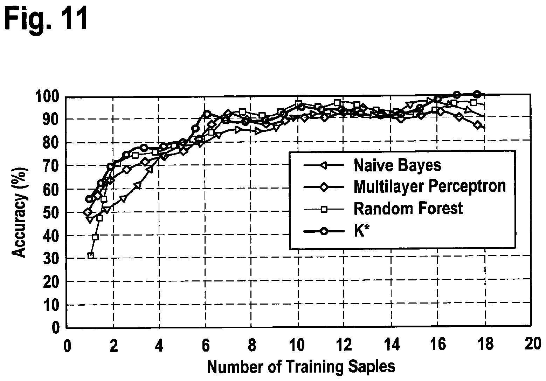

In order to determine if the network system 100 can identify room occupants (who entered/left), 11 subjects are asked to go through a door and come back 10 times each. This provides 11*2*10 = 220 data points with ground truth that are used in this post-facto analysis. Every time when someone enters/exits, 38 simple features are extracted as described above. A 10 fold cross validation is performed using these features of 220 entrance/exit events and 97.27% accuracy is obtained in occupant identification using the Naive Bayes classifier. The accuracy is 95%, 96.36%, and 98.18% for multilayer perceptron, random forest, and K* classifiers, respectively. In order to see how much training is needed, the number of training instances is varied from 1 to 18 and occupant identification accuracy of the rest of the data is shown in FIG. 11 for all these 4 approaches. The graph shows that with only 6 samples, the accuracy is over 80% for all of the approaches with K* classifier reaching 91.56% accuracy. With 10 samples, all the classifiers reach over 90% accuracy. K* reaches 100% accuracy with 17 training samples. It shows a great potential for personalizing room environment, e.g., room temperature, light intensity by identifying individuals in a medium sized office. Coupled with building floorplan and multiple hypothesis testing, these features are also used for tracking individuals throughout a building in real-time.

To count people in the site, for each person within that frame, the system determines Di, which is 1 if the person is at the left side of Doori and 0 otherwise, where i ∈ {1,2}. To be at the left side, someone's head center has to be at the left of the line segment AB for Door1, and at the left of all the three line segments CD, DE, and EF for Door2. The system increases the occupancy count if someone's Di is changed from 1 (at the previous frame) to 0 (at the current frame). If the direction of the person Dj (j is not equal to i) is changed from 1 to 0 later, the system does not increase the count again. However, if either Di or Dj is changed from 0 to 1 later, the system decreases the occupancy count and ignores a similar change (0 to 1) subsequently.

The embodiments described above have been shown by way of example, and it should be understood that these embodiments may be susceptible to various modifications and alternative forms

While the patent has been described with reference to various embodiments, it will be understood that these embodiments are illustrative and that the scope of the disclosure is not limited to them. Many variations, modifications, additions, and improvements are possible. More generally, embodiments in accordance with the patent have been described in the context or particular embodiments. Functionality may be separated or combined in blocks differently in various embodiments of the disclosure or described with different terminology. These and other variations, modifications, additions, and improvements may fall within the scope of the disclosure as defined in the claims that follow.

**Claims**

1. A depth sensing based system (100) comprising:

   a depth sensor (112) for detecting a number of occupants in a site; and
   an occupancy identification module coupled to the depth sensor (112) and is configured to perform at least one of verifying, tracking or identifying the number of occupants entering and existing the site, wherein the occupancy identification module is configured to:

   verify whether the occupant is a human ;
   track the occupant is either entering or existing the site; and
   identify at least one of head radius, shoulder size, height, walking speed of the occupant, wherein the depth sensing based system (100) further comprising a depth estimation module (124) configured to scan various depth levels of the occupant and extract contours of a head of the occupant, and further configured to verify the presence of a head and to verify the presence of a shoulder by using an orientation invariant 3D human model, wherein in order to verify the presence of the shoulder, a region of interest , ROI, surrounding the head and the shoulder is considered, and wherein the depth sensing based system (100) is further configured to detect a location of one door and to determine whether the occupant is entering or leaving the site for estimating the number of occupants at the site.

2. The depth sensing based system (100) of claim 1 wherein the depth estimation module (124) is coupled to the depth sensor (112).

3. The depth sensing based system (100) of claim 1 wherein the depth estimation module (124) is integrated into the occupancy identification module.

4. The depth sensing based system (100) of claim 3 wherein the occupancy identification module comprising at least one of greedy bipartite matching algorithm, Naive Bayes, Multilayer Perceptron, Random Forest, or K*.

5. The depth sensing based system (100) of claim 2 wherein the depth estimation module (124) comprising at least one of greedy bipartite matching algorithm, Naive Bayes, Multilayer Perceptron, Random Forest, or K*.

6. The depth sensing based system (100) of claim 1 further comprising a communication interface (118) communicatively coupled to an external device.

7. The depth sensing based system (100) of claim 6 wherein the external device is selected from a group consisting of a personal computer or desktop computer, a laptop, a cellular or smart phone, a tablet, a personal digital assistant , PDA, a wearable device, a gaming console, an audio device, a video device, an entertaining device, a HVAC, a controller, a lighting device, a server, a network, and a system.

8. The depth sensing based system (100) of claim 1 wherein the depth sensor (112) is a Time of Flight , TOF, sensor.

9. The depth sensing based system (100) of claim 1 wherein the depth sensor (112) is selected from a group consisting of an optical sensor, an imaging sensor, an acoustic sensor, a motion sensor, a global positioning system sensor, a thermal sensor, and an environmental sensor.

10. The sensing based system (100) of claim 1, wherein the depth sensor (112) is integrated into an imaging camera.

11. The sensing based system (100) of claim 1, wherein the depth sensor (112) is integrated into a camera.

**Patentansprüche**

1. Auf Tiefenerfassung basierendes System (100), Folgendes umfassend:

   einen Tiefensensor (112) zum Erfassen einer Anzahl von Insassen an einem Ort; und
   ein Belegungsidentifikationsmodul, das mit dem Tiefensensor (112) gekoppelt ist und konfiguriert ist zum Durchführen mindestens eines von Verifizieren, Verfolgen oder Identifizieren der Anzahl von Insassen, die den Ort betreten und verlassen, wobei das Belegungsidentifikationsmodul konfiguriert ist zum:

Überprüfen, ob der Insasse ein Mensch ist;
Verfolgen, ob der Insasse den Ort betritt oder verlässt; und
Identifizieren mindestens eines von Kopfradius, Schulterhöhe, Größe, Gehgeschwindigkeit des Insassen, wobei das auf Tiefenerfassung basierende System (100) ferner ein Tiefenschätzmodul (124) umfasst, das konfiguriert ist, um verschiedene Tiefenniveaus der Insassen zu scannen und Konturen eines Kopfes des Insassen zu extrahieren, und ferner konfiguriert ist, um das Vorhandensein eines Kopfes zu verifizieren und das Vorhandensein einer Schulter zu verifizieren, indem ein orientierungsinvariantes 3D-Menschenmodell verwendet wird, wobei zum Verifizieren des Vorhandenseins der Schulter eine Region von Interesse, ROI, die den Kopf und die Schulter umgibt, in Betracht gezogen wird, und wobei das auf Tiefenerfassung basierende System (100) ferner konfiguriert ist, um eine Position einer Tür zu erfassen und um zu bestimmen, ob der Insasse den Ort betritt oder verlässt, um die Anzahl der Insassen an dem Ort zu schätzen.

2. Auf Tiefenerfassung basierendes System (100) nach Anspruch 1, wobei das Tiefenschätzmodul (124) mit dem Tiefensensor (112) gekoppelt ist.

3. Auf Tiefenerfassung basierendes System (100) nach Anspruch 1, wobei das Tiefenschätzmodul (124) in das Belegungsidentifikationsmodul integriert ist.

4. Auf Tiefenerfassung basierendes System (100) nach Anspruch 3, wobei das Belegungsidentifikationsmodul mindestens einen der Algorithmen Greedy Bipartite Matching, Naive Bayes, Multilayer Perceptron, Random Forest oder K* umfasst.

5. Auf Tiefenerfassung basierendes System (100) nach Anspruch 2, wobei das Tiefenschätzmodul (124) mindestens einen der Algorithmen Greedy Bipartite Matching, Naive Bayes, Multilayer Perceptron, Random Forest oder K* umfasst.

6. Auf Tiefenerfassung basierendes System (100) nach Anspruch 1, ferner umfassend eine Kommunikationsschnittstelle (118), die kommunikativ mit einer externen Vorrichtung gekoppelt ist.

7. Auf Tiefenerfassung basierendes System (100) nach Anspruch 6, wobei die externe Vorrichtung aus einer Gruppe ausgewählt ist, die aus einem Personal-Computer oder einem Desktop-Computer, einem Laptop, einem Mobiltelefon oder Smartphone, einem Tablet, einem persönlichen digitalen Assistenten, PDA, einer tragbaren Vorrichtung, einer Spielkonsole, einer Audiovorrichtung, einer Videovorrichtung, einer Unterhaltungsvorrichtung, einer HLK-Anlage, einer Steuerung, einer Beleuchtungsvorrichtung, einem Server, einem Netzwerk und einem System besteht.

8. Auf Tiefenerfassung basierendes System (100) nach Anspruch 1, wobei der Tiefensensor (112) eine Laufzeitsensor, TOF-Sensor, ist.

9. Auf Tiefenerfassung basierendes System (100) nach Anspruch 1, wobei der Tiefensensor (112) aus einer Gruppe ausgewählt ist, die aus einem optischen Sensor, einem Bildsensor, einem akustischen Sensor, einem Bewegungssensor, einem globalen Positionierungssystemsensor, einem Temperatursensor und einem Umgebungssensor besteht.

10. Auf Erfassung basierendes System (100) nach Anspruch 1, wobei der Tiefensensor (112) in eine Bildgebungskamera integriert ist.

11. Auf Erfassung basierendes System (100) nach Anspruch 1, wobei der Tiefensensor (112) in eine Kamera integriert ist.

**Revendications**

1. Système (100) basé sur la détection de profondeur comprenant :

un capteur de profondeur (112) permettant de détecter un nombre d'occupants dans un site; et
un module d'identification d'occupation couplé au capteur de profondeur (112) et est configuré pour effectuer au moins l'un parmi la vérification, le suivi ou l'identification du nombre d'occupants entrant dans le site et sortant du site, dans lequel le module d'identification d'occupation est configuré pour:

vérifier si l'occupant est un être humain;

suivre si l'occupant entre dans le site ou sort du site; et

identifier au moins l'un parmi le rayon de la tête, la taille des épaules, la taille, la vitesse de marche de l'occupant, dans lequel le système (100) à base de détection de profondeur comprenant en outre un module d'estimation de profondeur (124) configuré pour balayer divers niveaux de profondeur de l'occupant et extraire des contours d'une tête de l'occupant, et configuré en outre pour vérifier la présence d'une tête et pour vérifier la présence d'une épaule à l'aide d'un modèle d'être humain 3D à orientation invariante, dans lequel, afin de vérifier la présence de l'épaule, une région d'intérêt, ROI, entourant la tête et l'épaule est prise en compte, et dans lequel le système (100) à base de détection de profondeur est en outre configuré pour détecter un emplacement d'une porte et pour déterminer si l'occupant entre dans le site ou quitte le site afin d'estimer le nombre d'occupants sur le site.

2. Système (100) basé sur la détection de profondeur selon la revendication 1, dans lequel le module d'estimation de profondeur (124) est couplé au capteur de profondeur (112) .

3. Système (100) basé sur la détection de profondeur selon la revendication 1, dans lequel le module d'estimation de profondeur (124) est intégré dans le module d'identification d'occupation.

4. Système (100) basé sur la détection de profondeur selon la revendication 3, dans lequel le module d'identification d'occupation comprenant au moins l'un parmi un algorithme de correspondance bipartite glouton, bayésien naïf, perceptron multicouche, forêt aléatoire, ou K*.

5. Système (100) basé sur la détection de profondeur selon la revendication 2, dans lequel le module d'estimation de profondeur (124) comprenant au moins l'un parmi un algorithme de correspondance bipartite glouton, bayésien naïf, perceptron multicouche, forêt aléatoire, ou K*.

6. Système (100) basé sur la détection de profondeur selon la revendication 1, comprenant en outre une interface de communication (118) couplée en communication à un dispositif externe.

7. Système (100) basé sur la détection de profondeur selon la revendication 6, dans lequel le dispositif externe est sélectionné dans un groupe constitué d'un ordinateur personnel ou d'un ordinateur de bureau, d'un ordinateur portable, d'un téléphone cellulaire ou intelligent, d'une tablette, d'un assistant numérique personnel, PDA, d'un dispositif à porter sur soi, d'une console de jeu, d'un dispositif audio, d'un dispositif vidéo, d'un dispositif de divertissement, d'un CVC, d'un dispositif de commande, d'un dispositif d'éclairage, d'un serveur, d'un réseau et d'un système.

8. Système (100) basé sur la détection de profondeur selon la revendication 1, dans lequel le capteur de profondeur (112) est un capteur de temps de vol, TOF.

9. Système (100) basé sur la détection de profondeur selon la revendication 1, dans lequel le capteur de profondeur (112) est choisi dans un groupe constitué d'un capteur optique, d'un capteur d'imagerie, d'un capteur acoustique, d'un capteur de mouvement, d'un capteur de système de positionnement global, d'un capteur thermique et d'un capteur environnemental.

10. Système (100) basé sur la détection selon la revendication 1, dans lequel le capteur de profondeur (112) est intégré dans une caméra d'imagerie.

11. Système (100) basé sur la détection selon la revendication 1, dans lequel le capteur de profondeur (112) est intégré dans une caméra.

# Fig. 1A

50

106

100

| Depth Sensing System |
| --- |

L

104

L

.
.
.

L

102

L

| Depth Sensing System |
| --- |

100n

# Fig. 1B

108

100

110

# Fig. 1C

Fig. 2

EP 3 398 111 B1

# Fig. 3

# Fig. 4

EP 3 398 111 B1

## Fig. 5A

502 ⟋      500

## Fig. 5B

502 ⟋      510

## Fig. 5C

520

502

## Fig. 6A

600

## Fig. 6B

600

## Fig. 6C

600

**Fig. 6D**

600

**Fig. 7**

700

## Fig. 8A

~ 800

## Fig. 8B

~ 800

# Fig. 8C

800

# Fig. 8D

800

# Fig. 8E

800

# Fig. 8F

800

## Fig. 8G

800

## Fig. 8H

800

# Fig. 8I

800

# Fig. 8J

800

# Fig. 8K

800

# Fig. 8L

800

# Fig. 9A

900

# Fig. 9B

900

# Fig. 9C

900

Special Edge, SE

# Fig. 9D

900

912

# Fig. 9E

# Fig. 10

# Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150294482 A1
- US 2011176000 A1
- US 2013243240 A1
- US 2014139633 A1

**Non-patent literature cited in the description**

- **TIM VAN OOSTERHOUT.** Head Detection in Stereo Data for People Counting and Segmentation. *VISAPP 2011,* 05 March 2011